# EUROPÄISCHE PATENTSCHRIFT

(11) **EP 1 738 629 B1**
(45) Veröffentlichungstag und Bekanntmachung des Hinweises auf die Patenterteilung: **08.04.2015**
(21) Anmeldenummer: 06013211.5
(22) Anmeldetag: 27.06.2006
(51) Int. Cl.: A01B 21/08

(54) **Landwitschaftsmaschine in Form einer Scheibenegge**
Disc harrow
Déchaumeuse à disques

(30) Priorität: 02.07.2005 DE 102005030923
(43) Veröffentlichungstag der Anmeldung: 03.01.2007
(73) Patentinhaber: Amazonen-Werke H. Dreyer GmbH & Co. KG, 49205 Hasbergen (DE)
(72) Erfinder: Feldhaus, Werner, 27801 Dötlingen/Geveshausen (DE); Ammermann, Wilfried, 26203 Wardenburg (DE)

(56) Entgegenhaltungen:
- DE-C- 272 877
- DE-U1-202004 007 238
- US-A- 2 990 020
- US-A- 4 538 689
- US-A- 4 562 780

## Beschreibung

Die Erfindung betrifft eine Landwirtschaftsmaschine in Form einer Scheibenegge zur Bodenkultivierung.

Durch die DE 103 28 210 A1 ist eine derartige Landwirtschaftsmaschine bekannt. Diese Landwirtschaftsmaschine ist als Scheibenegge ausgebildet und weist einen Rahmen mit den zwei hintereinander liegenden Querreihen und nebeneinander angeordneten und im Winkel zur Fahrtrichtung angestellten und frei drehbar angeordneten Scheiben auf. Die Scheiben der ersten Querreihe sind in entgegengesetzt schräg zu den Scheiben der zweiten Querreihe angestellt. Die Scheiben der ersten Querreihe werfen den Boden in die eine Richtung, während die Scheiben der hinteren Querreihe den Boden in die andere Richtung werfen. Die jeweils äußeren Scheiben jeder Querreihe werfen den Boden nach außen außerhalb des Arbeitsbereiches der Maschine. Dieses ist nachteilig.

Eine Landwirtschaftmaschine gemäß dem Oberbegriff des Anspruchs 1 ist aus der Druckschrift DE-U1-20 2004 007 238 bekannt.

Der Erfindung liegt die Aufgabe zugrunde, hier mit einfachen Maßnahmen Abhilfe zu schaffen, so dass der von den Scheiben zu Seite geworfenen Boden nicht auf einen Bereich außerhalb des Arbeitsbereiches der Maschine gelangt.

Diese Aufgabe wird durch die Maßnahmen gemäß Patentanspruch 1 gelöst.

Infolge dieser Maßnahmen fangen die den äußeren Scheiben zugeordneten Seitenscheiben, den von den äußeren Scheiben zur Seite geworfenen Boden derart auf, dass dieser Boden nicht außerhalb des Arbeitsbereiches der Maschine geworfen wird.

Eine einfache Anordnung der Seitenscheibe lässt sich dadurch erreichen, dass die Seitenscheibe mittels eines Tragarmes an dem Rahmen an der Maschine befestigt ist.

Um die Seitenscheibe, die sich außerhalb der Arbeitsbreite der Maschine für den Transport auf öffentlichen Straßen innerhalb der für den Transport auf öffentlichen Straßen zulässigen Gesamtbreite in einfacher Weise bringen zu können, ist vorgesehen, dass der Tragarm der Seitenscheibe mittels eines eine Gelenkachse aufweisenden Gelenkes am Rahmen angelenkt ist.

Wenn ausreichend Freiraum zwischen den einzelnen Teilen der Maschine besteht, ist es möglich, dass die Seitenscheibe in diesem Bereich eingeschwenkt wird. Hierzu ist dann vorgesehen, dass der Tragarm mittels eines eine aufrechte Achse aufweisenden Gelenkes am Rahmen angelenkt ist.

Auch ist es möglich, dass der Tragarm mittels eines in der Ebene der Fahrtrichtung liegenden Gelenkachse aufweisenden Gelenkes am Rahmen angelenkt ist. Infolge dieser Maßnahmen wird die Seitenscheibe nach innen auf die Werkzeuge verschwenkt. Diese Lösung wird man anwenden, wenn ein relativ kurzer Tragarm vorhanden ist. Um zu erreichen, dass zum Transport der Maschine auf öffentlichen Straßen und Wege, Maschine, wenn sich die Seitenscheiben in Arbeitsstellung der Maschine außerhalb dieses zulässigen Maßes befinden, die Maschine auf ein zulässiges Maß für den Transport auf öffentlichen Straßen gebracht werden kann, ist vorgesehen, dass der Tragarm mit der Seitenscheibe in Arbeitsposition seitlich der Scheibe und in eine Transportposition innerhalb der Transportbreite der Maschine bringbar und/oder verschwenkbar ist.

Um den Tragarm mit der Seitenscheibe in der jeweils vorgesehenen Position sicher zu halten, ist vorgesehen, dass zwischen dem Tragarm und dem Rahmen ein den Tragarm in der jeweiligen Position haltende oder verriegelnde Verriegelungseinrichtung angeordnet ist.

Um die Seitenscheibe in der jeweils optimalen Position bei den verschiedenen Einsatzbedingungen einstellen zu können ist vorgesehen, dass zwischen dem Tragarm und dem Rahmen ein Verstellelement angeordnet ist. Infolge dieser Maßnahmen kann der Tragarm mit der Seitenscheibe in der gewünschten Position eingestellt werden. Hierbei kann das Verstellelement als motorisches Stellelement, wie beispielsweise Hydraulikzylinder etc. ausgebildet sein.

Um die Seitenscheibe in der richtigen Höhenlage zum Boden und zu den zugeordneten Scheiben der Maschine einstellen zu können, um das gewünschten Arbeitsergebnis zu erreichen, ist vorgesehen, dass die Seitenscheiben in Höhenrichtung verstellbar an dem Tragarm angeordnet ist.

Um die Seitenscheibe in die jeweils optimale Position einstellen zu können, damit in optimaler Weise der Boden in den Arbeitsbereich der Maschine zurückgeführt wird, ist vorgesehen, dass die Seitenscheiben in Höhenrichtung verstellbar an dem Tragarm angeordnet ist.

Die Landwirtschaftsmaschine kann eine Nachlaufwalze aufweisen und/oder in eine Sämaschine integriert sein.

Somit wird also durch die Seitenscheibe in einfacher Weise eine gleichmäßige Bodenbearbeitung auch im Randbereich der Landwirtschaftsmaschine erreicht und gleichzeitig wird sichergestellt, dass die Transportbreite der Landwirtschaftsmaschine auf öffentlichen Straßen und Wegen eingehalten werden kann.

Weitere Einzelheiten der Erfindung sind der Beispielsbeschreibung und den Zeichnungen zu entnehmen.

Hierbei zeigen
- Fig. 1: die landwirtschaftliche Maschine in Arbeitsstellung und perspektivischer Ansicht von in Fahrtrichtung links vorne gesehen,
- Fig. 2: die Landwirtschaftsmaschine in perspektivischer Ansicht in Fahrtrichtung von rechts vorne gesehen,
- Fig. 3: die Landwirtschaftsmaschine in Arbeitstellung und in Draufsicht,
- Fig. 4: die in Fahrtrichtung gesehene linke Seitenscheibe in perspektivischer Darstellung und vergrößerten Maßstab,
- Fig. 5: die landwirtschaftliche Maschine in Transportstellung und perspektivischer Ansicht von in Fahrtrichtung links vorne gesehen,
- Fig. 6: die Landwirtschaftsmaschine in perspektivischer Ansicht in Fahrtrichtung von rechts vorne gesehen und
- Fig. 7: die Landwirtschaftsmaschine in Transportstellung und in Draufsicht.

Die als Kurzscheibenegge zur Bodenkultivierung ausgebildete Landwirtschaftsmaschine weist einen Rahmen 1 auf, an dessen vorderer Seite eine Zugvorrichtung 2 angeordnet ist. An dem Rahmen 1 sind in dessen vorderen Bereich zwei beabstandet zueinander und hintereinander angeordnete Querträger 3 und 4 parallel verlaufend zueinander angeordnet. An den Querträgern 3, 4 sind mittels einer Gummilagerung 5 an Tragarmen 6 frei drehbar gelagerte Scheiben 7 angeordnet, die im Winkel zur Fahrtrichtung 8 und zur aufrechten Ebene angestellt sind. Die Scheiben 7 der ersten Querreihe 9 sind entgegengesetzt schräg zu den Scheiben 7 der zweiten Querreihe 10 angeordnet, wie die Zeichnungen zeigen. Hinter den Scheiben 7 ist an dem Rahmen 1 eine gegenüber dem Rahmen 1 und den Scheiben 7 die höhenverstellbar angeordnete Nachlaufwalze 11, im Ausführungsbeispiel eine Keilringwalze angeordnet, die gleichzeitig als Fahrwerk als Egge beim Straßentransport dient.

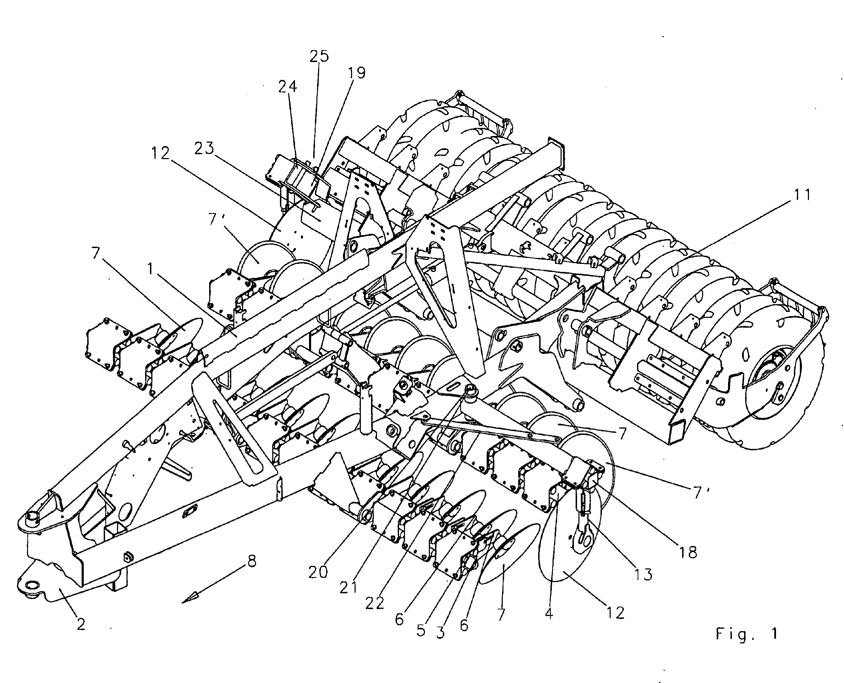

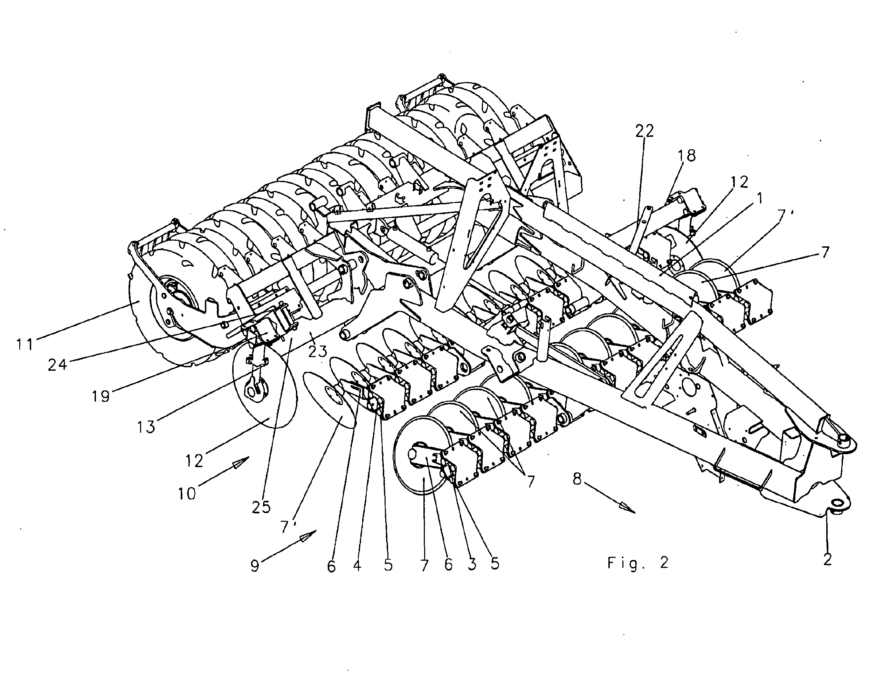

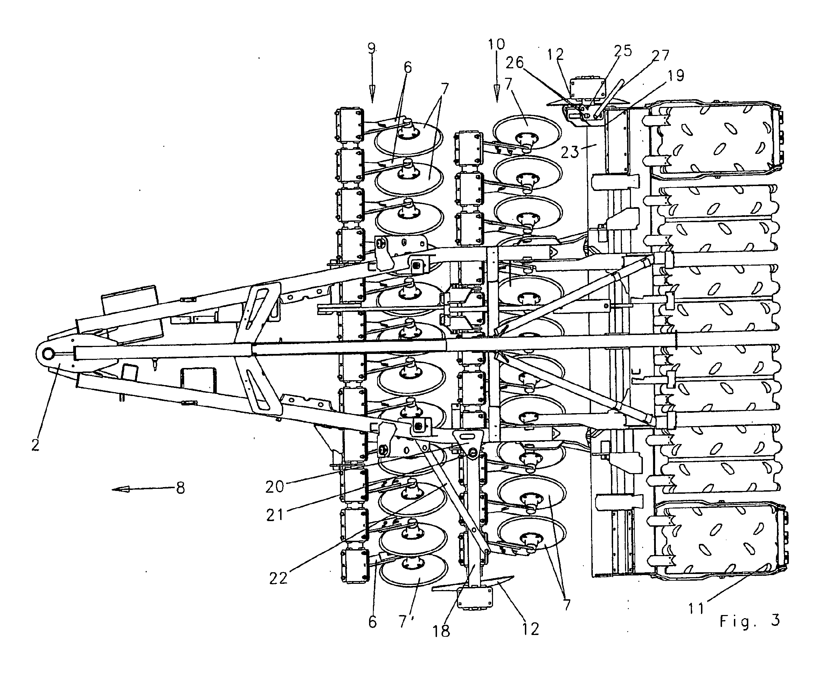

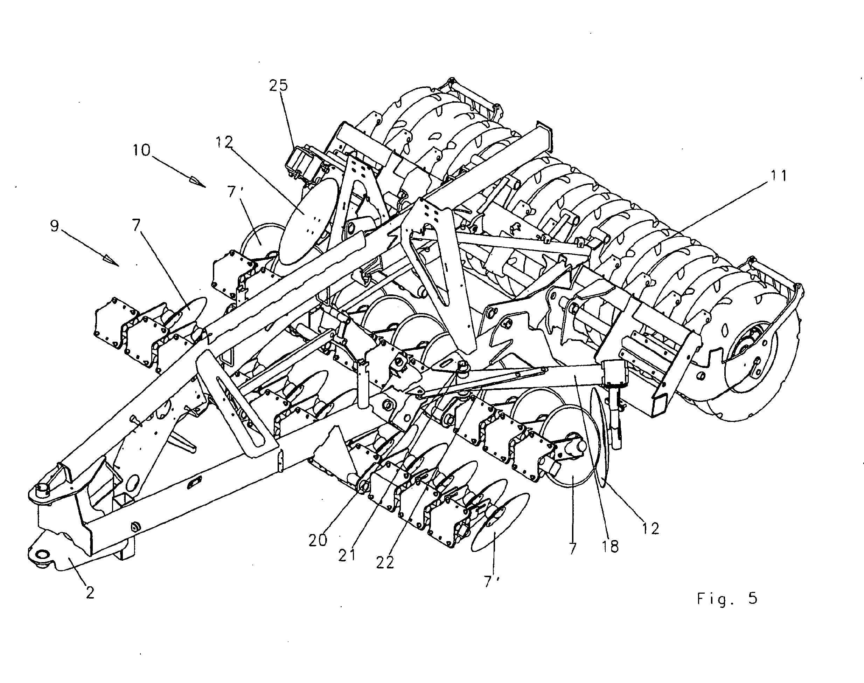

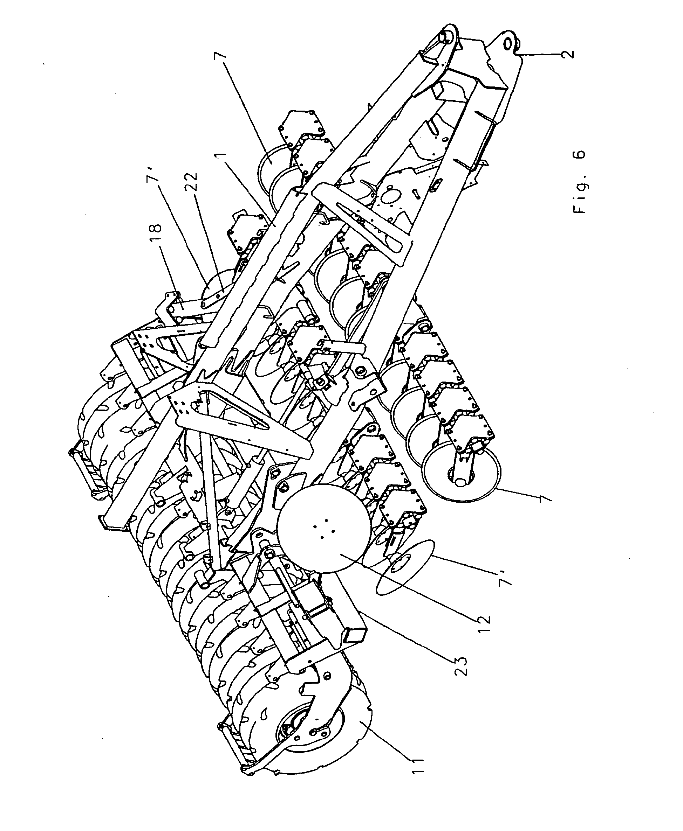

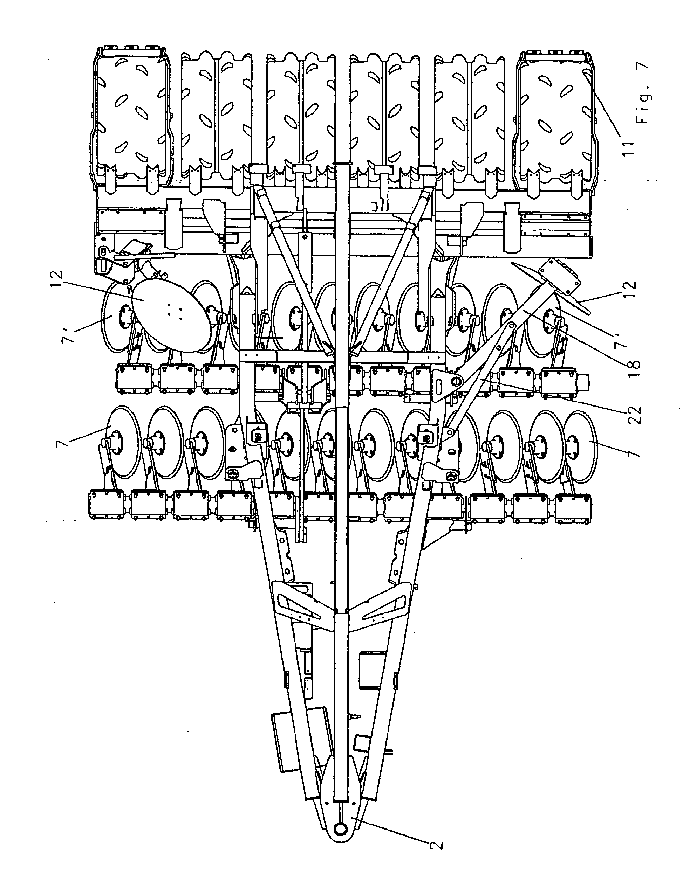

Der jeweils äußersten nach außen werfenden Scheibe 7' einer Querreihe 9,10 ist nach hinten versetzt seitlich beabstandet zur besagten äußeren Scheibe 7'eine den von der Scheibe 7'zur Seite geworfenen Boden auffangende und frei drehbar gelagerte Seitenscheibe 12 zugeordnet. Diese Seitenscheibe 12 ist an einem Arm 13 frei drehbar gelagert angeordnet. Dieser Arm 13 ist zwei geteilt ausgebildet, so dass die Seitenscheibe 13 in der Höhe verstellbar ausgebildet ist. Dieser Arm 13 besteht aus zwei teleskopartig zueinander einschiebbaren bzw. ausziehbaren Teilen 14 und 15, die mittels eines Arretierungselementes 16 zueinander in der jeweils gewünschten Stellung festsetzbar sind. Der Arm 13 ist mittels einer Gummilagerung 17 an einem Tragarm 18 bis 19 angeordnet. Auf der linken Seite ist der Tragarm 18 mittels eines Gelenkes 20, dessen Gelenkachse 21 aufrecht verläuft am Rahmen 1 der Scheibenegge angelenkt. Zwischen dem Tragarm 18 und dem Rahmen 1 ist die als Stange ausgebildete Verstellelement 22 angeordnet. Diese Stange 22 fixiert den Tragarm 18, in der in den Fig. 1-3 dargestellten Arbeitsstellung. Der Tragarm 18, der auf der in Fahrtrichtung 8 gesehenen linken Seite der Scheibenegge angeordnet ist, ist um die aufrecht verlaufende Gelenkachse 21 aus den in den Fig. 1-3 dargestellte Position in die in den Fig. 5-7 dargestellte Transportposition nach hinten zu verschwenken und mittels des Verstellelementes 22 zu arretieren. Das Verstellelement 22 kann auch in nicht dargestellter Weise als motorisches Verstellelement beispielsweise als doppelt wirkender Hydraulikzylinder ausgebildet sein. Hierüber ist der Tragarm 18 mit der Seitenscheibe 12 in die in Fig. 1-3 dargestellte Arbeitsstellung zu verstellen und festzusetzen sowie die in den Fig. 5-7 dargestellte Transportposition zu verschwenken und festzusetzen.

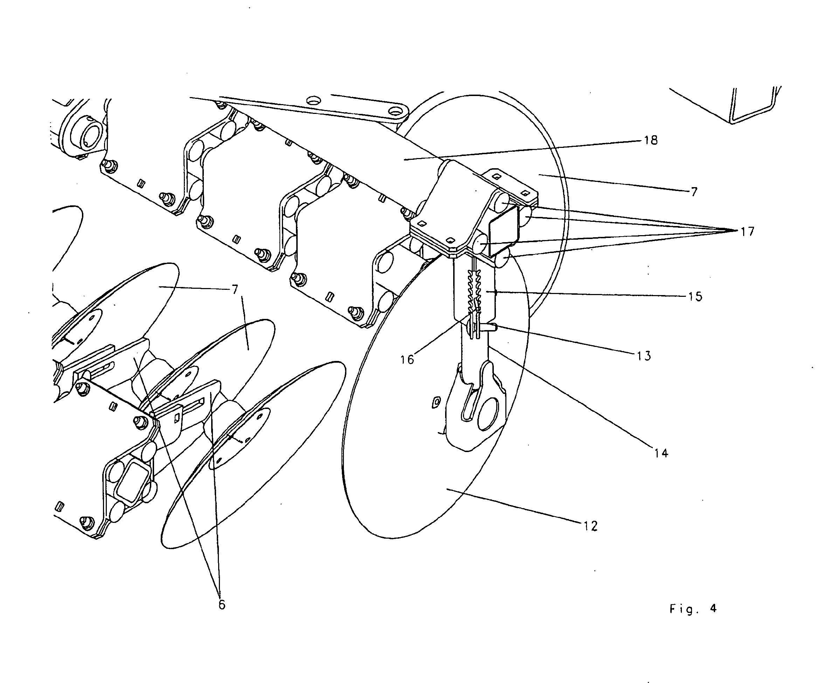

Die auf der rechten Seite der hinteren Querreihe 10 der Scheibe 7' zugeordnete Seitenscheibe 12 ist an dem Rahmen 23 der Nachlaufwalze 11 befestigt. Hierzu ist der Tragarm 18 mittels eines in Fahrtrichtung 8 weisenden Ebene angeordneten Gelenkachse 24 aufweisenden Gelenkes 25 angeordnet. Dieser Tragarm 19 weist im Bereich des Gelenkes 25 das die korrespondierenden Verriegelungsdurchbrüche 26 aufweisenden Verstellelement 27 auf. Durch die Durchbrüche 26 ist ein Verriegelungsbolzen 27 zu stecken. Es kann auch zwischen dem Gelenkteil, welches am Rahmen 23 der Nachlaufwalze 11 angeordnet ist und dem Gelenkteil des Tragarm 19 ein motorisches Stellelement angeordnet sein, um den Tragarm 19 mit der Seitenscheibe 12 in die in Fig. 1-3 dargestellte Arbeitsposition und in die in den Fig. 5-7 dargestellte Transportposition zu verschwenken. Die Seitenscheibe 12 ist ebenfalls mittels eines teleskopartig ein- und ausziehbaren Armes 13, wie in Fig. 4 dargestellt, über eine Gummilagerung 17 an dem Tragarm 19 angeordnet.

Die Aufgabe der Seitenscheiben 12 ist die von den jeweils äußeren Scheiben 7' nach außen geworfene Erde vor dem Ende des Arbeitsbereiches der Maschine aufzufangen und wieder in den Arbeitsbereich der Maschine zurückzuführen.

## Patentansprüche

1. Landwirtschaftsmaschine in Form einer Scheibenegge zur Bodenkultivierung, wobei die Scheibenegge einen Rahmen (1) mit mehreren zumindest in zwei hintereinander liegenden Querreihen (9) und nebeneinander angeordneten und im Winkel zur Fahrtrichtung angestellten und frei drehbar angeordneten Scheiben aufweist, wobei die Scheiben (7) der ersten Querreihe (9) entgegengesetzt schräg zu den Scheiben der zweiten Querreihe (10) angeordnet sind, wobei der jeweils äußersten nach außen werfenden Scheibe (7) einer Querreihe (9, 10) in Fahrtrichtung (8) nach hinten versetzt seitlich beabstandet zur besagten äußeren Scheibe (7') eine den von der Scheibe (7') zur Seite geworfenen Boden auffangende Vorrichtung (12) zugeordnet ist, **dadurch gekennzeichnet, dass** die Vorrichtung als frei drehbar gelagerte Seitenscheibe (12) ausgebildet ist, dass die Seitenscheibe (12) mittels eines Tragarmes (18, 19) an dem Rahmen (1) an der Maschine befestigt ist, dass der Tragarm (18) mittels eines eine aufrechte Achse (21) aufweisenden Gelenkes (22) am Rahmen angelenkt ist und dass der Tragarm (18, 19) mit der Seitenscheibe (12) in Arbeitsposition seitlich der Scheibe (7') und in eine Transportposition innerhalb der Transportbreite der Maschine bringbar und/oder verschwenkbar ist.

2. Landwirtschaftsmaschine nach Anspruch 1, **dadurch gekennzeichnet, dass** der Tragarm (18, 19) der Seitenscheibe (12) mittels eines eine Gelenkachse (21, 24) aufweisenden Gelenkes (22, 24) am Rahmen (1) angelenkt ist.

3. Landwirtschaftsmaschine nach Anspruch 1, **dadurch gekennzeichnet, dass** der Tragarm (19) mittels eines in der Ebene der Fahrtrichtung (8) liegenden Gelenkachse (24) aufweisenden Gelenkes (25) am Rahmen angelenkt ist.

4. Landwirtschaftsmaschine nach einem oder mehreren der vorstehenden Ansprüche, **dadurch gekennzeichnet, dass** zwischen dem Tragarm (18, 19) und dem Rahmen (1) ein den Tragarm (18, 19) in der jeweiligen Position haltende oder verriegelnde Verriegelungseinrichtung angeordnet ist.

5. Landwirtschaftsmaschine nach einem oder mehreren der vorstehenden Ansprüche, **dadurch gekennzeichnet, dass** zwischen dem Tragarm (18, 19) und dem Rahmen (1) ein Verstellelement angeordnet ist.

6. Landwirtschaftsmaschine nach Anspruch 5, **dadurch gekennzeichnet, dass** das Verstellelement (22) als motorisches Verstellelement, wie beispielsweise Hydraulikzylinder etc. ausgebildet ist.

7. Landwirtschaftsmaschine nach einem oder mehreren der vorstehenden Ansprüche, **dadurch gekennzeichnet, dass** die Seitenscheiben (12) in Höhenrichtung verstellbar an dem Tragarm (18, 19) angeordnet ist.

8. Landwirtschaftsmaschine nach Anspruch 5, **dadurch gekennzeichnet, dass** die Seitenscheibe (12) an dem Arm (18, 19) um eine aufrechte Achse in unterschiedlichen Winkelpositionen zur Fahrtrichtung (8) einstellbar angeordnet ist.

9. Landwirtschaftsmaschine nach einem oder mehreren der vorstehenden Ansprüche, **dadurch gekennzeichnet, dass** hinter den Scheiben (7) eine höheneinstellbare Nachlaufwalze (11) angeordnet ist.

10. Landwirtschaftsmaschine nach einem oder mehreren der vorstehenden Ansprüche, **dadurch gekennzeichnet, dass** die Scheibenegge in eine Sämaschine integriert ist.

## Claims

1. Agricultural machine in the form of a disc harrow for cultivating soil, wherein the disc harrow has a frame (1) with a plurality of discs which are arranged at least in two consecutive transverse rows (9) and next to one another and are positioned at an angle with respect to the direction of travel and are arranged in a freely rotatable manner, wherein the discs (7) of the first transverse row (9) are arranged obliquely in an opposed manner to the discs of the second transverse row (10), wherein the respectively outermost, outwardly throwing disc (7) of one transverse row (9, 10) is assigned, offset to the rear in the direction of travel (8) and spaced apart laterally from said outer disc (7'), an apparatus (12) which collects the soil thrown to the side by the disc (7'), **characterized in that** the apparatus is designed as a side disc (12) which is mounted in a freely rotatable manner, **in that** the side disc (12) is fastened to the frame (1) on the machine by means of a supporting arm (18, 19), **in that** the supporting arm (18) is articulated on the frame by means of a joint (22) having a vertical axis (21), and **in that** the supporting arm (18, 19) is bringable and/or pivotable with the side disc (12) into a working position to the side of the disc (7') and into a transport position within the transport width of the machine.

2. Agricultural machine according to Claim 1, **characterized in that** the supporting arm (18, 19) of the side disc (12) is articulated on the frame (1) by means of a joint (22, 24) having a joint axis (21, 24).

3. Agricultural machine according to Claim 1, **characterized in that** the supporting arm (19) is articulated on the frame by means of a joint (25) having a joint axis (24) lying in the plane of the direction of travel (8).

4. Agricultural machine according to one or more of the preceding claims, **characterized in that** a locking device holding or locking the supporting arm (18, 19) in the respective position is arranged between the supporting arm (18, 19) and the frame (1).

5. Agricultural machine according to one or more of the preceding claims, **characterized in that** an adjustment element is arranged between the supporting arm (18, 19) and the frame (1).

6. Agricultural machine according to Claim 5, **characterized in that** the adjustment element (22) is designed as a motorized adjustment element, such as, for example, a hydraulic cylinder, etc.

7. Agricultural machine according to one or more of the preceding claims, **characterized in that** the side discs (12) are arranged on the supporting arm (18, 19) so as to be adjustable in the vertical direction.

8. Agricultural machine according to Claim 5, **characterized in that** the side disc (12) is arranged on the arm (18, 19) so as to be settable about a vertical axis into different angular positions with respect to the direction of travel (8) .

9. Agricultural machine according to one or more of the preceding claims, **characterized in that** a height-adjustable trailing roller (11) is arranged behind the discs (7).

10. Agricultural machine according to one or more of the preceding claims, **characterized in that** the disc harrow is integrated in a sowing machine.

## Revendications

1. Machine agricole prenant la forme d'une déchaumeuse à disques pour la culture des sols, la déchaumeuse à disques comportant un châssis (1) avec plusieurs disques disposés au minimum dans deux rangées transversales (9) et disposés les uns derrière les autres et disposés côte à côte et placés selon un certain angle par rapport à la direction de conduite et disposés de façon à pouvoir pivoter librement, les disques (7) de la première rangée transversale (9) étant disposés selon une oblique opposée par rapport aux disques de la deuxième rangée transversale (10), un dispositif (12) absorbant le sol lancé en côté par le disque (7') étant associé au disque (7) lançant respectivement le plus vers l'extérieur d'une rangée transversale (9, 10), dans la direction de conduite (8), vers l'arrière de façon décalée, à une certaine distance en côté, par rapport audit disque (7') extérieur, **caractérisée en ce que** le dispositif prend la forme d'un disque latéral (12) disposé de façon à pouvoir pivoter librement, que le disque latéral (12) est fixé au châssis (1) au niveau de la machine à l'aide d'un bras porteur (18, 19), que le bras porteur (18) est articulé au niveau du châssis à l'aide d'une articulation (22) comportant un axe (21) debout et que le bras porteur (18, 19) peut être amené et/ou pivoté avec le disque latéral (12) en position de travail à côté du disque (7') et dans une position de transport à l'intérieur de la largeur de transport de la machine.

2. Machine agricole selon la revendication 1, **caractérisée en ce que** le bras porteur (18, 19) du disque latéral (12) est articulé au châssis (1) à l'aide d'une articulation (22, 24) comportant un axe d'articulation (21, 24).

3. Machine agricole selon la revendication 1, **caractérisée en ce que** le bras porteur (19) est articulé au châssis à l'aide d'une articulation (25) comportant un axe d'articulation (24) reposant dans le plan de la direction de conduite (8).

4. Machine agricole selon l'une quelconque des revendications précédentes ou plusieurs d'entre elles, **caractérisée en ce qu'**un dispositif de verrouillage maintenant ou verrouillant le bras porteur (18, 19) dans la position respective est disposé entre le bras porteur (18, 19) et le châssis (1).

5. Machine agricole selon l'une quelconque des revendications précédentes ou plusieurs d'entre elles, **caractérisée en ce qu'**un élément de réglage est disposé entre le bras porteur (18, 19) et le châssis (1).

6. Machine agricole selon la revendication 5, **caractérisée en ce que** l'élément de réglage (22) prend la forme d'un élément de réglage motorisé, par exemple d'un cylindre hydraulique.

7. Machine agricole selon l'une quelconque des revendications précédentes ou plusieurs d'entre elles, **caractérisée en ce que** les disques latéraux (12) sont disposés de façon réglable dans la direction de la hauteur, au niveau du bras porteur (18, 19).

8. Machine agricole selon la revendication 5, **caractérisée en ce que** le disque latéral (12) est disposé de façon réglable au niveau du bras (18, 19), autour d'un axe debout, dans différentes positions angulaires par rapport à la direction de conduite (8).

9. Machine agricole selon l'une quelconque des revendications précédentes ou plusieurs d'entre elles, **caractérisée en ce qu'**un cylindre (11) esclave suiveur réglable en hauteur est disposé derrière les disques (7).

10. Machine agricole selon l'une quelconque des revendications précédentes ou plusieurs d'entre elles, **caractérisée en ce que** la déchaumeuse à disques est intégrée dans une machine à semer.
